# EUROPÄISCHE PATENTSCHRIFT

(11) **EP 1 706 657 B1**
(45) Veröffentlichungstag und Bekanntmachung des Hinweises auf die Patenterteilung: **04.08.2010**
(21) Anmeldenummer: 05700924.3
(22) Anmeldetag: 14.01.2005
(51) Int. Cl.: F16D 65/12

(54) **BREMSSCHEIBE**
BRAKE DISK
DISQUE DE FREIN

(30) Priorität: 19.01.2004 DE 102004002710
(43) Veröffentlichungstag der Anmeldung: 04.10.2006
(60) Teilanmeldung: 09000957.2
(73) Patentinhaber: Gustav Magenwirth GmbH & Co. KG, 72574 Bad Urach (DE)
(72) Erfinder: KÜNSTLE, Reiner, 72555 Metzingen (DE); RUOPP, Michael, 89180 Berghülen (DE)
(74) Vertreter: Friese, Martin
(86) Internationale Anmeldenummer: PCT/EP2005/000326
(87) Internationale Veröffentlichungsnummer: WO 2005/068869

(56) Entgegenhaltungen:
- EP-A- 0 985 843
- EP-A- 1 094 229
- EP-A- 1 122 162
- WO-A-03/064882
- DE-U1- 29 924 516
- US-A- 4 645 041
- PATENT ABSTRACTS OF JAPAN Bd. 012, Nr. 145 (M-693), 6. Mai 1988 (1988-05-06) -& JP 62 266233 A (YAMAHA MOTOR CO LTD), 19. November 1987 (1987-11-19)

## Beschreibung

Die vorliegende Erfindung betrifft eine Bremsscheibe gemäß dem Oberbegriff von Anspruch 1.

Die US-A-4 645 041 zeigt eine Bremsscheibe gemäß dem Oberbegriff von Anspruch 1.

Eine derartige geteilte Bremsscheibe wird beispielsweise von der Firma Beringer als AERONAL Bremsscheibe vertrieben. Die bekannte Bremsscheibe weist ein Bremsband aus Stahl auf, das über sechs Verbindungselemente mit einem Aluminiuminnenteil verbunden ist. Das Bremsband weist sechs Fortsätze auf, die an entsprechende Fortsätze des Innenteils angrenzen. Die aneinandergrenzenden Fortsätze weisen jeweils halbkreisförmige Aussparungen auf, in denen die Verbindungselemente aufgenommen sind. Die gegenüberliegenden Ränder der Fortsätze verlaufen in Umfangsrichtung. Die bei Vorwärtsfahrt in Rotationsrichtung jeweils vor der Aussparung liegenden Abschnitte der Ränder sind in einem kleineren Abstand zur Mitte der Bremsscheibe angeordnet, als die entsprechend hinteren Abschnitte. Die Verbindungslinien der Enden der jeweils halbkreisförmigen Aussparungen für die Verbindungselemente sind daher ungefähr 12° gegenüber der Tangentialrichtung gezeigt. Daher liegt bei einer neuwertigen Bremsscheibe die beim Bremsen auftretende Hauptbelastung durch den Verbindungsbolzen nicht mehr in einem Bereich, an dem das Innenteil an das Bremsband angrenzt, sondern etwas weiter in der Mitte. Da der Fortsatz des Innenteils wischen dem dem Fortsatz des Bremsbands gegenüberliegenden Rand und dem Innenring zur Befestigung an einer Nabe nicht in Kraftrichtung der beim Bremsen auftretenden Kraft liegt, verbiegt sich beim Bremsen der höhere hintere Abschnitt des Fortsatzes und die Hauptbelastung verlagert sich mehr in Richtung des Endes der Aussparungen in den Fortsätzen des Innenteils. Dadurch erfolgt eine höhere Abnutzung der Aussparungen. Da weiterhin die dem Fortsatz des Bremsbandes gegenüberliegenden Ränder in Umfangsrichtung verlaufen, verdreht sich das Bremsband bei zunehmender Abnutzung gegenüber dem Innenteil in Umfangsrichtung und die Bremskraft wird weiterhin durch das Verbindungselement von dem Bremsband auf das Innenteil übertragen. Die Abnutzung verstärkt sich dadurch noch weiter.

Der Erfindung liegt daher die Aufgabe zugrunde, eine geteilte Bremsscheibe anzugeben, die bei einem geringen Gewicht eine geringe Verformung bzw. Abnutzung im Bereich der Verbindung zwischen dem Bremsband und dem Innenteil aufweist.

Die Aufgabe der Erfindung wird mit den Merkmalen von Anspruch 1 gelöst. Vorteilhafte Ausgestaltungen der Erfindung sind in den abhängigen Ansprüchen angegeben.

Gemäß einer Ausführung der Erfindung umfaßt eine erfindungsgemäße Bremsscheibe für eine Scheibenbremse, insbesondere für Motorräder oder Fahrräder, ein Bremsband aus einem ersten Material, das eine hohe Wärmefestigkeit aufweist, ein Innenteil aus einem zweiten Material, das eine niedrigere Dichte als das erste Material aufweist, wobei das Bremsband mehrere Fortsätze und das Innenteil mehrere Fortsätze aufweist, die jeweils paarweise aneinandergrenzend, angeordnet sind, und mehrere Verbindungselemente, die das Bremsband mit dem Innenteil verbinden, indem sie in den Fortsätzen ausgebildeten Aussparungen aufgenommen sind, wobei die Aussparung derart ausgebildet ist, daß die Verbindungslinie zwischen den Enden der Aussparung in einen Winkel von 15 bis 85° zur Tangentialrichtung liegt.

Unter Tangentialrichtung ist in dieser Anmeldung die Richtung einer Tangente eines mit der Bremsscheibe konzentrischen Kreises in einem Punkt zu verstehen, der in dem Bereich der Aussparung bzw. des Randabschnitts liegt, auf die bzw. den Bezug genommen wird.

Beim Bremsen wirken Bremsbeläge auf das Bremsband und verzögern dessen Rotation. Die Bremskraft wird von dem Bremsband über die Verbindungselemente auf das Innenteil übertragen, die in den Aussparungen der Fortsätze aufgenommen sind. Die erfindungsgemäße Ausführung hat den Vorteil, daß die Verbindungselemente beim Bremsen die Aussparungen nicht mehr hauptsächlich an deren Enden belasten, sondern weiter in der das Mitte der Aussparungen. Weil die Belastung nicht im Randbereich stattfindet ergibt sich eine geringere Abnutzung.

Vorzugsweise beträgt der Winkel 20 bis 60° und insbesondere vorzugsweise 25 bis 40°. Am meisten bevorzugt werden Ausführungen mit einem Winkel von ungefähr 30° beträgt. Es hat sich gezeigt, daß bei diesem Winkel die Belastungen am besten aufgenommen werden und die Abnutzungen am geringsten sind.

Vorzugsweise weist das bei Vorwärtsfahrt in Rotationsrichtung vordere Ende der Aussparung einen kleineren Abstand zur Mitte der Bremsscheibe als das bei Vorwärtsfahrt in Rotationsrichtung hintere Ende der Aussparung auf.

Alternativ oder zusätzlich können die bei Vorwärtsfahrt in Rotationsrichtung vor den Aussparungen liegenden Abschnitte der. Ränder der Fortsätze in einem Winkel gegenüber der jeweiligen Tangentialrichtung verlaufen, wobei die jeweiligen bei Vorwärtsfahrt in Rotationsrichtung vorderen Enden der Bereiche einen kleineren Abstand zur Mitte der Bremsscheibe als die bei Vorwärtsfahrt in Rotationsrichtung entsprechenden hinteren Enden der Bereiche aufweisen. Das hat den Vorteil, daß sich die Ränder der Fortsätze des Bremsbandes an den gegenüberliegenden Rändern der Fortsätze des Innenteils abstützen können, wenn die Aussparungen in den Fortsätzen des Innenteils und/oder die Verbindungselemente soweit abgenutzt sind, daß sich die Ränder infolge einer leichten Verdrehung zwischen Bremsband und Innenteil in Umfangsrichtung berühren. Dadurch wird eine weitergehende starke Abnutzung verhindert, weil die Bremskraft auch durch die aufeinanderstoßenden Ränder übertragen werden kann.

Alternativ oder zusätzlich können die bei Vorwärtsfahrt in Rotationsrichtung hinter den Aussparungen liegenden Abschnitte der Ränder der Fortsätze in einem Winkel gegenüber der jeweiligen Tangentialrichtung verlaufen, wobei die jeweiligen bei Vorwärtsfahrt in Rotationsrichtung vorderen Enden der Bereiche einen kleineren Abstand zur Mitte der Bremsscheibe als die bei Vorwärtsfahrt in Rotationsrichtung entsprechenden hinteren Enden der Bereiche aufweisen. Daraus ergeben sich die oben mit Bezug auf die Schrägstellung vor der Aussparung liegenden Abschnitte genannten Vorteile. Vorteilhafterweise sind sowohl die vor als auch die hinter den Aussparungen liegenden Abschnitte sowohl des Bremsbandes als auch des Innenteils derart ausgebildet.

Die verschiedenen Winkel können gleich groß oder verschieden groß sein. Die sich gegenüberliegenden Ränder können geradlinig oder zumindest teilweise oder ganz krummlinig ausgebildet sein.

Alternativ oder zusätzlich können die Aussparung oder die Aussparungen in den Fortsätzen des Innenteils die in ihnen aufgenommenen Verbindungselemente in einem Winkelbereich von mehr als 180° umschließen. Dadurch ergibt sich eine bessere Abstützung in dem in der Regel weicheren Innenteil und somit eine geringere Abnutzung mit den erwähnten weiteren Vorteilen. Vorzugsweise umschließen die Aussparung oder die Aussparungen in den Fortsätzen des Innenteils die in ihnen aufgenommenen Verbindungselemente in einem Winkelbereich von mehr als 181°, 185°, 190° bzw. 195°. Gute Ergebnisse hinsichtlich einer geringen Abnutzung lassen sich mit einem Winkelbereich von ungefähr 200° erreichen.

Der Winkelbereich kann 185 bis 300°, vorzugsweise 190 bis 270° und insbesondere ungefähr 200° betragen.

Die Verbindungselemente können Bolzen und/oder Nieten sein.

Das Bremsband kann aus Stahl ausgebildet sein. Das Bremsband kann wellenförmig oder kreisringförmig ausgebildet sein. Weiterhin kann das Bremsband Löcher aufweisen, die vorzugsweise als Langlöcher oder kreisförmig ausgebildet sind.

Aus Gewichtsgründen ist das Innenteil vorzugsweise aus Leichtmetall oder einer Leitmetalllegierung, insbesondere aus Aluminium, einer Aluminiumlegierung, Titan, einer Titanlegierung, einer Magnesiumlegierung oder einer anderen geeigneten Leichtmetalllegierung, ausgebildet. Das Innenteil kann einen Innenring zur Befestigung an einer Nabe aufweisen.

Vorzugsweise können die Fortsätze jeweils eine bei Vorwärtsfahrt in Rotationsrichtung vordere Strebe und jeweils eine bei Vorwärtsfahrt in Rotationsrichtung hintere Strebe aufweisen.

Gemäß einer bevorzugten Ausführung ist die hintere Strebe derart ausgerichtet, daß die hintere Strebe im wesentlichen in der beim Bremsen bei Vorwärtsfahrt auftretenden Bremskraftrichtung liegt. Das hat den Vorteil, daß die Strebe leichter ausgebildet werden kann, weil die Belastungen quer zur Längsrichtung geringer sind. Dieses Merkmal kann auch alleine ohne die oben angegebenen Merkmale für geteilte Bremsscheiben vorteilhaft sein und eine Erfindung begründen.

Die Erfindung wird anhand der in den Figuren gezeigten Ausführungsbeispielen näher beschrieben.
- Figur 1: zeigt eine Seitenansicht einer erfindungsgemäßen Bremsscheibe gemäß einer ersten Ausführungsform.
- Figur 2: zeigt eine Seitenansicht einer erfindungsgemäßen Bremsscheibe gemäß einer zweiten Ausführungsform.
- Figur 3: zeigt eine vergrößerte Teilansicht der Seitenansicht der Bremsscheibe von Figur 2.
- Figur 4: zeigt einen Schnitt durch einen Abschnitt der Bremsscheibe durch den Bereich der Verbindung zwischen Bremsband und Innenteil entlang der Linie IV-IV von Figur 3.
- Figur 5: zeigt eine schematische Darstellung der sich gegen- überliegenden Ränder und der Aussparungen der Fortsätze vom dem Bremsband und dem Innenteil gemäß den Ausführungen von Figur 1 und Figur 2.
- Die Figuren 6-10: zeigen der Figur 5 entsprechende schematische Darstellungen alternativer Ausbildungen der Ränder und Aussparungen.
- Figur 11: zeigt eine Seitenansicht einer erfindungsgemäßen Bremsscheibe gemäß einer der bevorzugten Aus- führungsform.
- Figur 12: zeigt eine vergrößerte Teilansicht der Seitenansicht der Bremsscheibe von Figur 11.

Die Figuren 13 und 14 zeigen den Figuren 11 und 12 entsprechende Ansichten ohne Darstellung der Verbindungselemente.

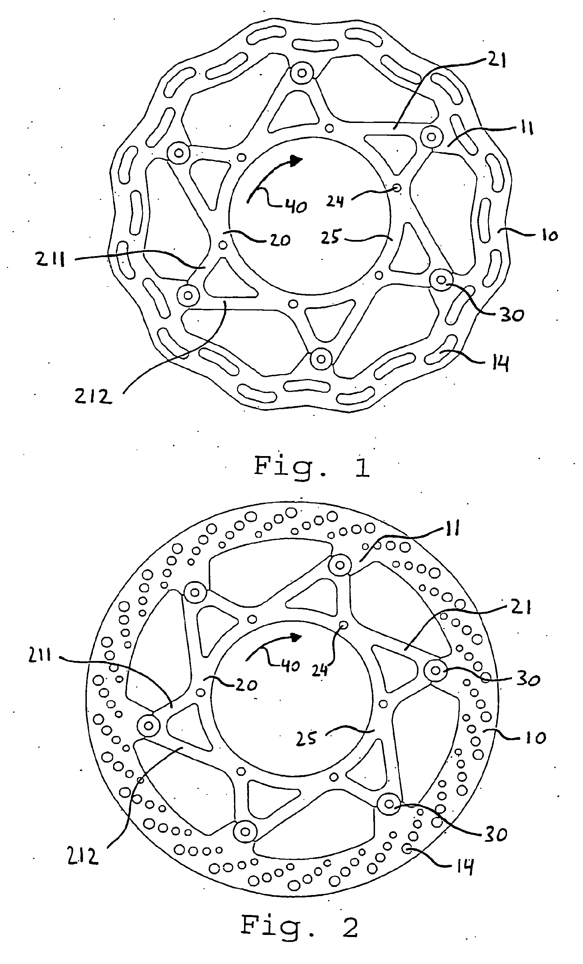

Figur 1 zeigt eine Seitenansicht einer erfindungsgemäßen Bremsscheibe. Die Bremsscheibe weist ein Bremsband 10 und ein Innenteil 20 auf. An dem Bremsband 10 sind sechs Fortsätze 11 ausgebildet, die sechs Fortsätzen 21 des Innenteils 20 gegenüberliegen. Das Bremsband 10 ist mit dem Innenteil 20 durch sechs Verbindungselemente 30 in den Bereichen der Fortsätze verbunden.

Die Fortsätze 21 weisen eine in für Vorwärtsfahrt in Rotationsrichtung 40 vordere Strebe 211 und eine bei Vorwärtsfahrt in Rotationsrichtung 40 hintere Strebe 212 auf. Die hintere Strebe 212 liegt im Wesentlichen genau in der beim Bremsen auftretenden Richtung der von der Strebe aufgenommen Bremskraft, die von dem Bremsband über die Verbindungselemente 30 auf das Innenteil 20 übertragen wird.

Das Bremsband weist einen Innenring 25 mit sechs Löchern 24 zur Befestigung an einer nicht dargestellten Nabe auf.

Das Bremsband 10 ist wellenförmig ausgebildet und weist zur Gewichtsersparnis und Kühlung Langlöcher 14 auf.

Figur 2 zeigt eine alternative Ausführung einer erfindungsgemäßen Bremsscheibe von der Seite. Diese Ausführung unterscheidet sich von der in Figur 1 dargestellten Ausführung nur durch die Gestaltung des Bremsbandes. Es werden die gleichen Bezugszeichen verwendet. Wegen der sich entsprechenden Komponenten und Merkmale wird auf die Beschreibung von Figur 1 verwiesen. Im Folgenden wird auf die Unterschiede eingegangen.

Das Bremsband weist eine Kreisringform auf. In dem Bremsband sind Löcher 14 vorgesehen.

Es ist klar, daß alternativ zu den in den Figuren 1 und 2 dargestellten Ausführungen auch Bremsbänder ohne Löcher vorgesehen werden können.

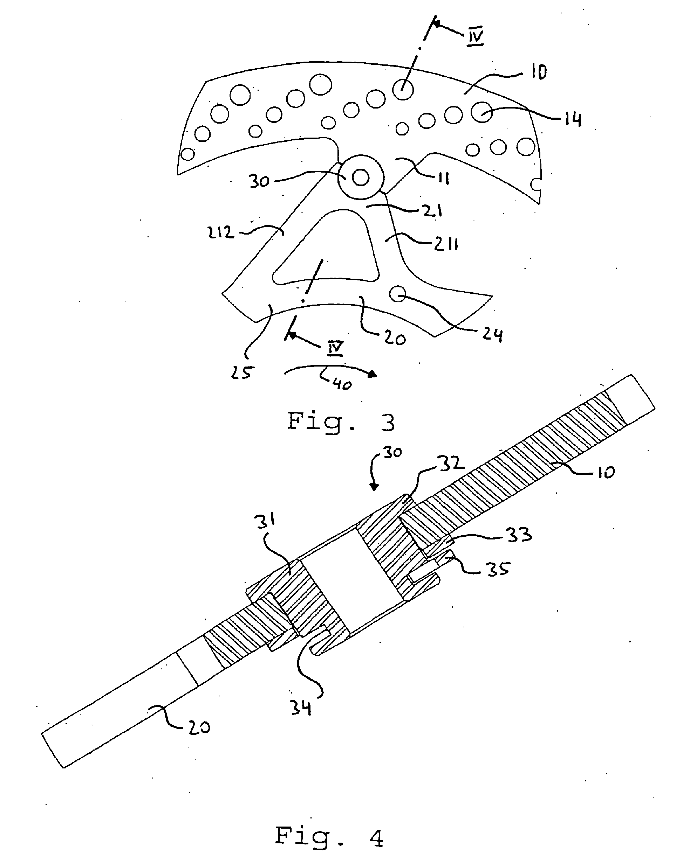

Figur 3 zeigt eine vergrößerte Teilansicht der Seitenansicht der erfindungsgemäßen Bremsscheibe von Figur 2. Das Bremsband 10 weist sechs Fortsätze 11 auf, die an entsprechende Fortsätze 21 des Innenteils 20 angrenzen. Die Fortsätze 11 und 21 sind mit einem Verbindungselement 30 miteinander verbunden, das in Figur 4 im Schnitt dargestellt ist. Aus Gewichtsgründen ist der Fortsatz 21 mit einer Aussparung ausgebildet, die von den Streben 211, 212 und dem Innenring 25 umschlossen wird.

Figur 4 zeigt eine Schnittansicht durch die Bremsscheibe von Figur 2 entlang der Linie IV-IV in Figur 3. Das Verbindungselement 30 umfaßt einen Bolzen 31, der auf einer Seite einen Flansch 32 und auf der anderen Seite eine Nut 34 aufweist. Der Flansch 32 bietet der Verbindung zwischen dem Bremsband 10 und dem Innenteil 20 Halt gegen eine seitliche Verschiebung. Auf der anderen Seite des Verbindungselements 30 ist ein Ring 33 vorgesehen, der durch einen Sprengring 35 gesichert ist, der in der Nut 34 angeordnet ist.

Bei einer alternativen Ausführung der erfindungsgemäßen geteilten Bremsscheibe sind die Verbindungselemente Nieten, die auf beiden Seiten Flansche bzw. Köpfe aufweisen, die eine Bewegung zwischen Bremsband und Innenteil in Axialrichtung beschränken. Wie bei der in den Figuren 2 bis 4 bzw. in der Figur 1 dargestellten Ausführung wird die Kraft beim Bremsen von dem Bremsband auf das Innenteil über die Verbindungslemente übertragen. Im übrigen wird auf die Beschreibung der anderen Ausführungsbeispiele verwiesen.

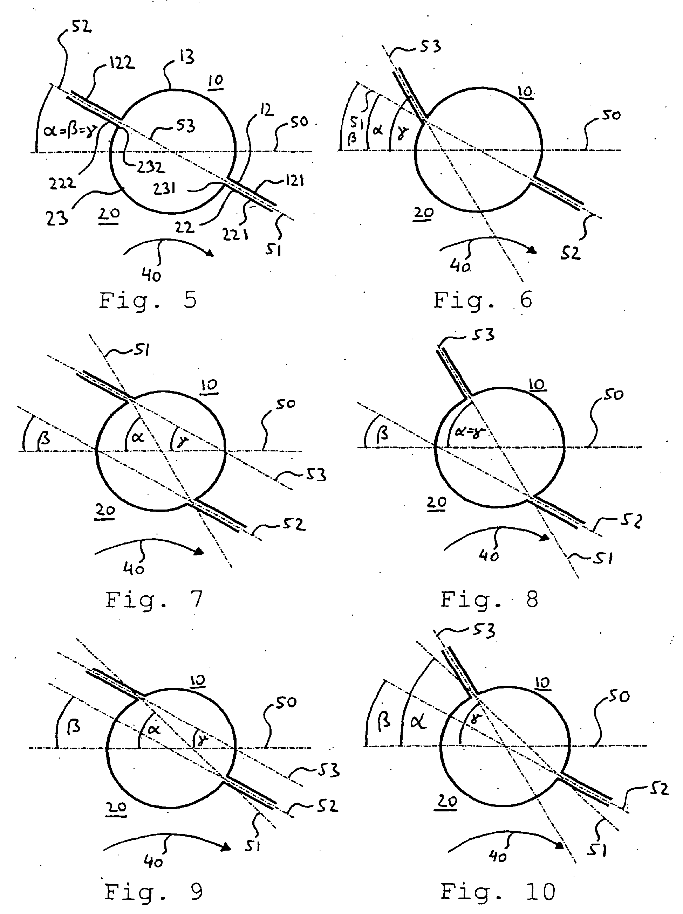

Figur 5 zeigt eine schematische Darstellung der Ausbildung der Ränder 12, 22 und Aussparungen 13, 23 im Übergangsbereich zwischen dem Bremsband 10 und dem Innenteil 20 der in Figur 2 gezeigten Ausführungform der Erfindung. Bei der Darstellung wird nur der Rand 12 des Bremsbandes 10 und der diesem gegenüberliegende Rand 22 am Beispiel eines der sechs sich gegenüberliegenden Fortsätze 11, 21 dargestellt. Das Verbindungselement 30 ist der Übersicht halber weggelassen. Der Rand 12 des Fortsatzes 11 des Bremsbandes 10 weist einen bei Vorwärtsfahrt in Rotationsrichtung 40 vorderen Abschnitt 121 auf, an den sich eine Aussparung 13 zur Aufnahme des Verbindungselementes und ein bei Vorwärtsfahrt in Rotationsrichtung 40 hinterer Abschnitt 122 anschließt. Der Rand 22 des Fortsatzes 21 des Innenteils 20 weist entsprechend einen bei Vorwärtsfahrt in Rotationsrichtung 40 vorderen Abschnitt 221, eine Aussparung 23 und einen bei Vorwärtsfahrt in Rotationsrichtung 40 hinteren Abschnitt 222 auf. Die Aussparungen 13 und 23 bilden zusammen eine etwa kreisförmige Durchgangsöffnung zur Aufnahme des nicht dargestellten Verbindungselements (Bolzen oder Niet).

Die Figuren 6 bis 10 zeigen beispielhaft alternative Ausbildungen der Ränder und Aussparungen 12, 13 sowie 22 und 23.

In den Figuren 6 bis 10 sind der Übersicht halber die Bezugszeichen für die Ränder und Aussparungen weggelassen worden, die bis auf die Orientierung und Größe den in Figur 5 gezeigten Rändern und Aussparungen entsprechen.

In den Figuren 5 bis 10 sind Hilfslinien eingezeichnet, die die Tangentialrichtung 50, die Verbindungslinie 51 zwischen den Enden der Aussparung 13 bzw. der Aussparung 23, die Richtung 52 des bei Vorwärtsfahrt in Fahrtrichtung vorderen Abschnitts 121 bzw. 221 sowie die Richtung 53 des bei Vorwärtsfahrt in Fahrtrichtung 40 hinteren Abschnitts 122 bzw. 222 umfassen.

In den Figuren 5 bis 10 sind des Weiteren der Winkel α zwischen der Tangentialrichtung 50 und der Verbindungslinie 51, der Winkel β zwischen der Tangentialrichtung 50 und der Richtung 52 sowie der Winkel γ zwischen der Tangentialrichtung und der Richtung 53 eingezeichnet.

In Figur 5 entspricht die Verbindungslinie 51 den Richtungen 52 und 53. Die Winkel α, β und γ sind gleich groß.

Bei der Ausführung von Figur 6 entspricht die Verbindungslinie 51 der Richtung 52 und der Winkel α dem Winkel β. Der Winkel γ zwischen der Tangentialrichtung 50 und der Richtung 53 ist größer als die Winkel α und β.

Bei der Ausführung von Figur 7 ist der Winkel α zwischen der Verbindungslinie 51 und der Tangentialrichtung 50 größer als die etwa gleich großen Winkel β und γ zwischen der Richtung 52 und der Tangentialrichtung 50 bzw. zwischen der Richtung 53 und der Tangentialrichtung 50.

Bei der Figur 8 entsprechen sich die Winkel α und γ, die größer als der Winkel β sind.

Bei der Figur 9 ist der Umschlingungsbereich der Aussparung 23 größer als der Umschlingungsbereich der Aussparung 13. Der Winkel α zwischen der Verbindungslinie 51 und der Tangentialrichtung 50 ist größer als die Winkel β und γ, die etwa gleich groß sind.

Bei der Ausführung von Figur 10 ist ebenfalls der Umschlingungsbereich der Aussparung 23 größer als der Umschlingungsbereich der Aussparung 13. Der Winkel γ zwischen der Richtung 53 und der Tangentialrichtung 50 ist größer als der Winkel α zwischen der Verbindungslinie 51 und der Tangentialrichtung 50, der wiederum größer als der Winkel β zwischen der Richtung 52 und der Tangentialrichtung 50 ist.

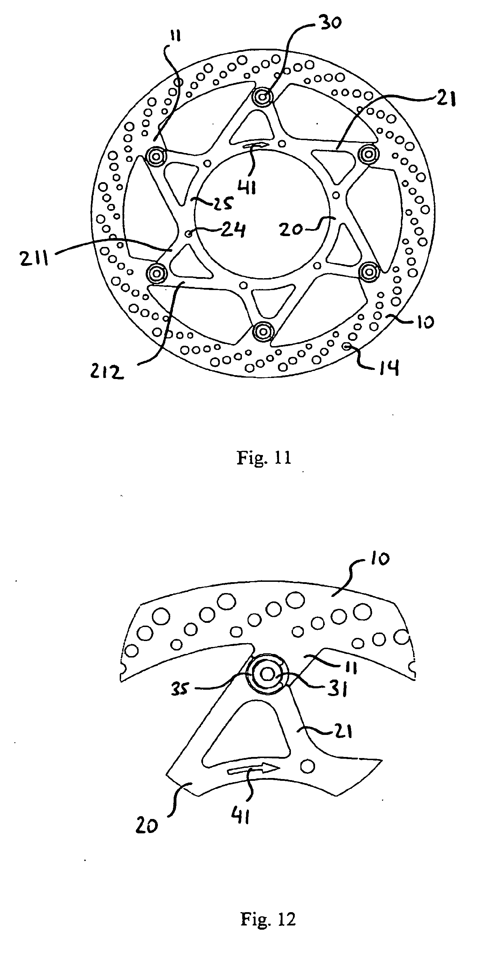

Die Figuren 11 bis 14 zeigen die derzeit bevorzugte Ausführungsform der Erfindung. Die gezeigte Bremsscheibe entspricht bis auf die Ausbildung der Fortsätze 11 des Bremsbandes 10 und der Fortsätze 21 des Innenteils 20 der Ausführungsform von Fig. 2. Im folgenden werden nur die Unterschiede zu der Ausführung von Fig. 2 beschrieben und im übrigen auf die obige Beschreibung der Ausführung von Fig. 2 verwiesen.

Fig. 11 zeigt eine Seitenansicht der Bremsscheibe mit den Verbindungselementen 30. Die Rotationsrichtung für Vorwärtsfahrt bezeichnet der Pfeil 41 auf dem Innenteil 20 der Bremsscheibe. Fig. 12 zeigt eine vergrößerte Teilansicht, die einen Ausschnitt der Bremsscheibe.im Bereich eines Paars aneinandergrenzender Fortsätze 11 und 21 zeigt.

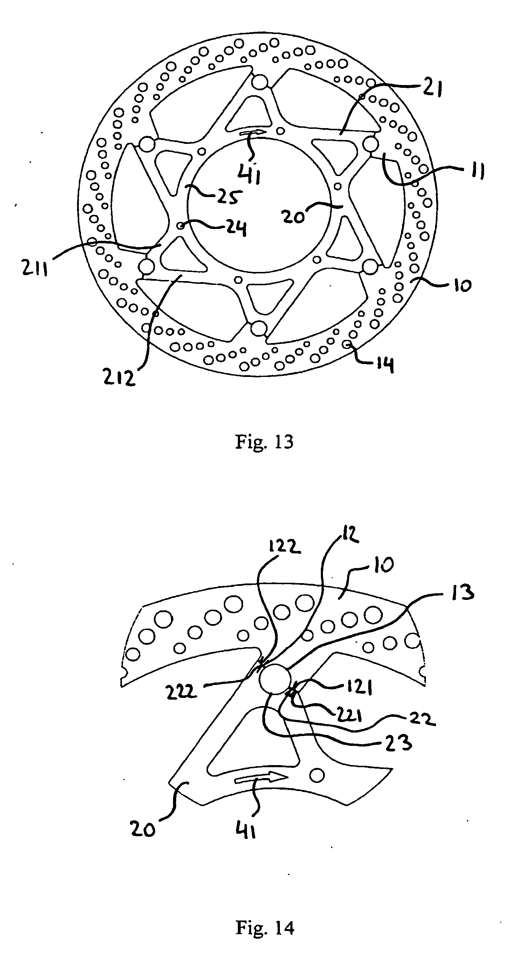

Die Figuren 13 und 14 zeigen den Figuren 11 und 12 entsprechende Ansichten, wobei zur besseren Darstellung der Ränder der Fortsätze die Verbindungselemente weggelassen wurden. Der Rand 12 des Fortsatzes 11 des Bremsbandes 10 weist einen bei Vorwärtsfahrt in Rotationsrichtung (Pfeil 41) vorderen Abschnitt 121 auf, an den sich eine Aussparung 13 zur Aufnahme des Verbindungselementes und ein bei Vorwärtsfahrt in Rotationsrichtung (Pfeil 41) hinterer Abschnitt 122 anschließt. Der Rand 22 des Fortsatzes 21 des Innenteils 20 weist entsprechend einen bei Vorwärtsfahrt in Rotationsrichtung (Pfeil 41) vorderen Abschnitt 221, eine Aussparung 23 und einen bei Vorwärtsfahrt in Rotationsrichtung (Pfeil 41) hinteren Abschnitt 222 auf. Die Aussparungen 13 und 23 bilden zusammen eine etwa kreisförmige Durchgangsöffnung zur Aufnahme des in den Figuren 11 und 12 dargestellten Verbindungselements 30. Der Winkelbereich, mit dem die Aussparung 23 des Innenteils 20 das Verbindungselement 30 umschließt, beträgt ungefähr 200°.

Die vorderen Abschnitte 222 der Ränder 22 verlaufen bezüglich der Tangentialrichtung steiler als die hinteren Abschnitte 221 der Ränder 22. Die Verbindungslinie zwischen den Enden der Aussparung 23 verläuft bezüglich der Tangentialrichtung flacher als die vorderen Abschnitte 222 der Ränder 22 und steiler als die hinteren Abschnitte 221 der Ränder 22. Die Ausführungsform entspricht im wesentlichen der in Fig. 10 dargestellten Alternative, wobei bei der Ausführungsform der Figuren 11 bis 14 der Winkelbereich der Aussparungen 23 etwas kleiner als bei der Ausführungsform von Fig. 10 ist, und die vorderen Abschnitte 222 bei der Ausführungsform der Figuren 11 bis 14 bezüglich der Tangentialrichtung etwas flacher als bei der Ausführungsform von Fig. 10 verlaufen.

Weitere. Alternativen sind denkbar. Insbesondere können die dargestellten Winkel α, β, γ variieren und die Abschnitte 121, 122, 221, 222 nicht nur gerade, sondern auch zumindest teilweise oder ganz krummlinig, beispielsweise gebogen, verlaufen.

## Patentansprüche

1. Bremsscheibe für eine Scheibenbremse mit einem Bremsband aus einem ersten Material, das eine hohe Wärmefestigkeit aufweist, und einem Innenteil (20) aus einem zweiten Material, das eine niedrigere Dichte als das erste Material aufweist, wobei das Bremsband mehrere Fortsätze (11) und das Innenteil (20) mehrere Fortsätze (21) aufweist, die jeweils paarweise aneinandergrenzend, angeordnet sind, und mehreren Verbindungselementen (30), die das Bremsband (10) mit dem Innenteil (20) verbinden, indem sie in den Fortsätzen (11 und 21) ausgebildeten Aussparungen (13, 23) aufgenommen sind,
**dadurch gekennzeichnet, daß** die Aussparung (23) im Fortsatz (21) des Innenteils (20) derart ausgebildet ist, daß die Verbindungslinie (51) zwischen den Enden der Aussparung (23) in einem Winkel α von 15 bis 85° zur Tangentialrichtung (50) liegt.

2. Bremsscheibe nach Anspruch 1, **dadurch gekennzeichnet, daß** der.Winkel α 20 bis 60° oder 25 bis 40° oder ungefähr 30° beträgt.

3. Bremsscheibe nach einem der vorhergehenden Ansprüche, **dadurch gekennzeichnet, daß** das bei Vorwärtsfahrt in Rotationsrichtung (40) vordere Ende (231) der Aussparung (23) im Fortsatz (21) des Innenteils (20) einen kleineren Abstand zur Mitte der Bremsscheibe als das bei Vorwärtsfahrt in Rotationsrichtung (40) hintere Ende (232) der Aussparung (23) aufweist.

4. Bremsscheibe nach einem der vorhergehenden Ansprüche, **dadurch gekennzeichnet, daß** der bei Vorwärtsfahrt in Rotationsrichtung vor der Aussparung (23) im Fortsatz (21) des Innenteils (20) liegende Abschnitt (221) des Rands (22) des Fortsatzes (21) in einem Winkel β gegenüber der Tangentialrichtung verläuft, wobei das bei Vorwärtsfahrt in Rotationsrichtung (40) vordere Ende des Bereichs (221) einen kleineren Abstand zur Mitte der Bremsscheibe als das bei Vorwärtsfahrt in Rotationsrichtung (40) hintere Ende des Bereichs (221) aufweist.

5. Bremsscheibe nach einem der vorhergehenden Ansprüche, **dadurch gekennzeichnet, daß** der bei Vorwärtsfahrt in Rotationsrichtung hinter der Aussparung (23) im Fortsatz (21) des Innenteils (20) liegende Abschnitt (222) des Rands (22) des Fortsatzes (21) in einem Winkel γ zu der Tangentialrichtung liegt, wobei das bei Vorwärtsfahrt in Rotationsrichtung (40) vordere Ende des Abschnitts (222) einen kleineren Abstand zur Bremsscheibenmitte als das bei Vorwärtsfahrt in Rotationsrichtung (40) hintere Ende des Abschnitts (222) aufweist.

6. Bremsscheibe nach Anspruch 5, **dadurch gekennzeichnet, daß** der Winkel γ größer als der Winkel α ist.

7. Bremsscheibe nach Anspruch 5, **dadurch gekennzeichnet, daß** der Winkel γ dem Winkel α entspricht.

8. Bremsscheibe nach einem der Ansprüche 6 oder 7 in Abhängigkeit von Anspruch 4, **dadurch gekennzeichnet, daß** der Winkel γ größer als der Winkel β ist.

9. Bremsscheibe nach einem der Ansprüche 6 oder 7 in Abhängigkeit von Anspruch 4, **dadurch gekennzeichnet, daß** der Winkel γ dem Winkel β entspricht.

10. Bremsscheibe nach einem der vorherigen Ansprüche, **dadurch gekennzeichnet, daß** die Aussparung(23) im Fortsatz (21) des Innenteils (20) das Verbindungselement (30) in einem Winkelbereich von mehr als 180°, 181°, 185°, 190° oder 195° umschließt.

11. Bremsscheibe nach Anspruch 10, **dadurch gekennzeichnet, daß** der Winkelbereich 185 bis 300° oder 190 bis 270° oder ungefähr 200° beträgt.

12. Bremsscheibe nach einem der vorhergehenden Ansprüche, **dadurch gekennzeichnet, daß** die Verbindungselemente (30) Bolzen (31) und/oder Nieten sind.

13. Bremsscheibe nach einem der vorhergehenden Ansprüche, **dadurch gekennzeichnet, daß** das Bremsband (10) aus Stahl ausgebildet ist.

14. Bremsscheibe nach einem der vorhergehenden Ansprüche, **dadurch gekennzeichnet, daß** das Bremsband (10) wellenförmig ausgebildet ist.

15. Bremsscheibe nach einem der vorhergehenden Ansprüche, **dadurch gekennzeichnet, daß** das Bremsband Löcher (14) oder als Langlöcher ausgebildete Löcher (14) aufweist.

16. Bremsscheibe nach einem der vorhergehenden Ansprüche, **dadurch gekennzeichnet, daß** das Innenteil (20) aus Leichtmetall oder einer Leitmetalllegierung oder aus Aluminium, einer Aluminiumlegierung, Titan, einer Titanlegierung oder einer Magnesiumlegierung ausgebildet ist.

17. Bremsscheibe nach einem der vorhergehenden Ansprüche, **dadurch gekennzeichnet, daß** das Innenteil (20) einen Innenring (25) zur Befestigung an einer Nabe aufweist.

18. Bremsscheibe nach einem der vorhergehenden Ansprüche, **dadurch gekennzeichnet, daß** die Fortsätze (21) des Innenteils (20) jeweils eine bei Vorwärtsfahrt in Rotationsrichtung vordere Strebe (211) und jeweils eine bei Vorwärtsfahrt in Rotationsrichtung hintere Strebe (212) aufweisen.

19. Bremsscheibe nach einem der vorhergehenden Ansprüche, **dadurch gekennzeichnet, daß** die Fortsätze (21) des Innenteils (20) jeweils eine bei Vorwärtsfahrt in Rotationsrichtung hintere Strebe (212) aufweisen, die derart ausgerichtet ist, daß die hintere Strebe (212) im wesentlichen in der beim Bremsen bei Vorwärtsfahrt auftretenden Bremskraftrichtung liegt.

## Claims

1. Brake disk for a disk brake comprising a brake band of a first material which has a high heat resistance and an inner part (20) of a second material which has a lower density than the first material, the brake band having a plurality of extensions (11) and the inner part (20) having a plurality of extensions (21), which in each case are arranged in pairs bordering one another, and a plurality of connecting elements (30) which connect the brake band (10) to the inner part (20) by being received in recesses (13, 23) formed in the extensions (11 and 21),
**characterized in that** the recess (23) in the extension (21) of the inner part (20) is formed in such a way that the connecting line (51) between the ends of the recess (23) is at an angle α of from 15 to 85° to the tangential direction (50).

2. Brake disk in accordance with claim 1, **characterized in that** the angle α is from 20 to 6.0° or from 25 to 40° or approximately 30°.

3. Brake disk in accordance with any of the preceding claims, **characterized in that that** end (231) of the recess (23) in the extension (21) of the inner part (20) which is at the front in the direction of rotation (40) during forward travel is a smaller distance away from the center of the brake disk than that end (232) of the recess (23) which is at the back in the direction of rotation (40)
during forward travel.

4. Brake disk in accordance with any of the preceding claims, **characterized in that that** section (221) of the edge (22) of the extension (21) which is before the recess (23) in the extension (21) of the inner part (20) in the direction of rotation during forward travel is at an angle β relative to the tangential direction, that end of the region (221) which is at the front in the direction of rotation (40) during forward travel being a smaller distance away from the center of the brake disk than that end of the region (221) which is at the back in the direction of rotation (40) during forward travel.

5. Brake disk in accordance with any of the preceding claims, **characterized in that that** section (222) of the edge (22) of the extension (21) which is behind the recess (23) in the extension (21) of the inner part (20) in the direction of rotation during forward travel is at an angle γ to the tangential direction, that end of the section (222) which is at the front in the direction of rotation (40) during forward travel being a smaller distance away from the center of the brake disk than that end of the section (222) which is at the back in the direction of rotation (40) during forward travel.

6. Brake disk in accordance with claim 5, **characterized in that** the angle γ is greater than the angle α.

7. Brake disk in accordance with claim 5, **characterized in that** the angle γ substantially corresponds to the angle α.

8. Brake disk in accordance with either of claims 6 and 7, depending on claim 4, **characterized in that** the angle γ is greater than the angle β.

9. Brake disk in accordance with any of claims 6 and 7, depending on claim 4, **characterized in that** the angle γ corresponds to the angle β.

10. Brake disk in accordance with any of the preceding claims, **characterized in that** the recess (23) in the extension (21) of the inner part (20) encloses the connecting element (30) in an angular range of more than 180°, 181°, 185°, 190° or 195°.

11. Brake disk in accordance with claim 10, **characterized in that** the angular range is from 185 to 300° or from 190 to 270° or approximately 200°.

12. Brake disk in accordance with any of the preceding claims, **characterized in that** the connecting elements (30) are bolts (31) and/or rivets.

13. Brake disk in accordance with any of the preceding claims, **characterized in that** the brake band (10) is formed from steel.

14. Brake disk in accordance with any of the preceding claims, **characterized in that** the brake band (10) is corrugated.

15. Brake disk in accordance with any of the preceding claims, **characterized in that** the brake band has holes (14) or holes (14) in the form of slots.

16. Brake disk in accordance with any of the preceding claims, **characterized in that** the inner part (20) is formed from light metal or a light metal alloy or from aluminum, an aluminum alloy, titanium, a titanium alloy or a magnesium alloy.

17. Brake disk in accordance with any of the preceding claims, **characterized in that** the inner part (20) has an inner ring (25) for fixing on a hub.

18. Brake disk in accordance with any of the preceding claims, **characterized in that** the extensions (21) of the inner part (20) have in each case a strut (211) which is at the front in the direction of rotation during forward travel and in each case a strut (212) which is at the back in the direction of rotation during forward travel.

19. Brake disk in accordance with any of the preceding claims, **characterized in that** the extensions (21) of the inner part (20) have in each case a strut (212) which is at the back in the direction of rotation during forward travel and which is oriented in such a way that the rear strut (212)
lies substantially in the braking force direction occurring during braking during forward travel.

## Revendications

1. Disque de frein pour un frein à disque comprenant une bande de freinage en un premier matériau qui présente une résistance élevée à la chaleur, et une partie intérieure (20) en un second matériau qui présente une densité inférieure au premier matériau, dans lequel la bande de freinage comporte plusieurs projections (11) et la partie intérieure (20) présente plusieurs projections (21), qui sont agencées respectivement adjacentes par paires, et plusieurs éléments de liaison (30) qui relient la bande de freinage (10) à la partie intérieure (20) en ce qu'ils sont reçus dans des échancrures (13, 23) formées dans les projections (11 et 21 ), **caractérisé en ce que** l'échancrure (23) dans la projection (21) de la partie intérieure (20) est réalisée de telle manière que la ligne de liaison (51) entre les extrémités de l'échancrure (23) se trouve sous un angle α de 15 à 85° par rapport à la direction tangentielle (50).

2. Disque de frein selon la revendication 1, **caractérisé en ce que** l'angle α est de 20 à 60° ou de 25 à 40°, ou environ 30°.

3. Disque de frein selon l'une des revendications précédentes, **caractérisé en ce que** l'extrémité (231), antérieure dans le sens de rotation (40) en marche avant, de l'échancrure (23) dans la projection (21) de la partie intérieure (20) présente par rapport au milieu du disque de frein une distance plus petite que l'extrémité (232), postérieure dans le sens de rotation (40) en marche avant, de l'échancrure (23).

4. Disque de frein selon l'une des revendications précédentes, **caractérisé en ce que** le tronçon (221) de la bordure (22) de la projection (21) situé, dans le sens de rotation en marche avant, devant l'échancrure (23) dans la projection (21) de la partie intérieure (20) s'étend sous un angle β par rapport à la direction tangentielle, et l'extrémité, antérieure dans le sens de rotation (40) en marche avant, de la zone (221) présente par rapport au milieu du disque de frein une distance plus petite que l'extrémité, postérieure dans le sens de rotation (40) en marche avant, de la zone (221).

5. Disque de frein selon l'une des revendications précédentes, **caractérisé en ce que** le tronçon (222) situé, dans le sens de rotation en marche avant, derrière l'échancrure (23) dans la projection (21) de la partie intérieure (20), de la bordure (22) de la projection (21), s'étend sous un angle γ par rapport à la direction tangentielle, et l'extrémité, antérieure dans le sens de rotation (40) en marche avant, du tronçon (222) présente par rapport au milieu du disque de frein une distance plus petite que l'extrémité du tronçon (222) postérieure dans le sens de rotation (40) en marche avant.

6. Disque de frein selon la revendication 5, **caractérisé en ce que** l'angle γ est supérieur à l'angle α.

7. Disque de frein selon la revendication 5, **caractérisé en ce que** l'angle γ correspond à l'angle α.

8. Disque de frein selon l'une des revendications 6 ou 7, prise en dépendance de la revendication 4, **caractérisé en ce que** l'angle γ est supérieur à l'angle β.

9. Disque de frein selon l'une des revendications 6 ou 7, prise en dépendance de la revendication 4, **caractérisé en ce que** l'angle γ correspond à l'angle β.

10. Disque de frein selon l'une des revendications précédentes, **caractérisé en ce que** l'échancrure (23) dans la projection (21) de la partie intérieure (20) entoure l'élément de liaison (30) dans une plage angulaire de plus de 180°, 181°, 185°, 190° ou 195°.

11. Disque de frein selon la revendication 10, **caractérisé en ce que** la plage angulaire va de 185 à 300° ou 290 à 270°, ou est d'environ 200°.

12. Disque de frein selon l'une des revendications précédentes, **caractérisé en ce que** les éléments de liaison (30) sont des goujons (31) et/ou des rivets.

13. Disque de frein selon l'une des revendications précédentes, **caractérisé en ce que** la bande de freinage (10) est réalisée en acier.

14. Disque de frein selon l'une des revendications précédentes, **caractérisé en ce que** la bande de freinage (10) est réalisée sous forme ondulée.

15. Disque de frein selon l'une des revendications précédentes, **caractérisé en ce que** la bande de freinage comporte des trous (14) ou des trous (14) réalisés sous forme de trous oblongs.

16. Disque de frein selon l'une des revendications précédentes, **caractérisé en ce que** la partie intérieure (20) est réalisée en métal léger ou en alliage de métal léger, ou en aluminium, en alliage d'aluminium, en titane, en alliage de titane au en alliage de magnésium.

17. Disque de frein selon l'une des revendications précédentes, **caractérisé en ce que** la partie intérieure (20) comprend une bague intérieure (25) pour la fixation à un moyeu.

18. Disque de frein selon l'une des revendications précédentes, **caractérisé en ce que** les projections (21) de la partie intérieure (20) comprennent chacune une entretoise (211) antérieure dans le sens de rotation en marche avant, et une entretoise (212) postérieure dans le sens de rotation en marche avant.

19. Disque de frein selon l'une des revendications précédentes, **caractérisé en ce que** les projections (21) de la partie intérieure (20) comprennent chacune une entretoise (212) postérieure dans le sens de rotation en marche avant, qui est orientée de telle manière que l'entretoise postérieure (212) se trouve sensiblement dans la direction de la force de freinage qui se produit lors d'un freinage en marche avant.
